# EUROPEAN PATENT APPLICATION

(11) **EP 4 571 535 A1**
(43) Date of publication of application: **18.06.2025**
(21) Application number: 23216908.6
(22) Date of filing: 14.12.2023
(51) Int. Cl.: G06F 16/93

(54) **SYSTEM AND METHOD FOR INTELLIGENT DATA AGGREGATION AND MINING**

(71) Applicant: Investis Digital, London SE1 2QN (GB)
(72) Inventor: Peakcock, Miles, Pound Ridge, NY 10576 (US); Apeksha, Mishra Sharma, London SW 100AP (GB)
(74) Representative: Murgitroyd & Company

(57) **Abstract**

A system for, and method of, asset data management comprise extracting asset data from a number of disparate computer systems and storing the asset data in a data lake 116 on a data storage device. The data lake 116 is interrogated by user to determine if asset data in the data lake 116 is reusable in a different context and providing potentially reusable assets to a user who interrogated the data lake 116.

## Description

### FIELD OF THE DISCLOSURE

The present disclosure relates to a system and method for intelligent data aggregation and mining. More particularly, not exclusively, it relates to a system and method for intelligent data aggregation and mining wherein data from disparate sources are centralised and mined in an intelligent manner. Even more particularly, but not exclusively, the present disclosure relates a system and method for intelligent data aggregation and mining in which data corresponding to assets of an organisation are obtained from disparate sources, centralised and mined in an intelligent manner.

### BACKGROUND

Many organisations, in particular, but not exclusively, large and multinational organisations, have data corresponding to assets, for example marketing materials, which are produced for one entity that could be used by another entity within the organisation but are not made available to other entities within the organisation. This leads to repetitious effort in producing assets that may be identical or very similar to those already available within the organisation. The production of these repeated assets not only requires the use of many person hours of work but also results in the use of large amounts computational resources such as data storage. The reusability of digital assets has become more important, particularly, but not exclusively, in relation to marketing due to the increasing number of channels available for the use of digital assets such as branding and

These repetitious efforts in producing assets within an organisation typically arise from poor internal communications of what assets are available within the organisation and due to the fact that there is no coherent technological framework within which to aggregate data corresponding to the assets as each entity within the organisation may be running their own asset management system that may not be compatible or able to share data relating to assets that each respect entity within the organisation has.

An additional issue is that even when an entity possesses assets it is often the case that the asset data is not catalogued properly and is not readily discoverable within an entity, let alone across a wider organisation.

A further issue is that the capture and storage of asset data does not necessarily capture contextual information and, for example in the case of a marketing asset the brief that provides an in-depth overview of the concepts, goals, and details of the marketing or advertising campaign. Such contextual information is required to make informed decisions relating to the applicability of an asset for reuse in another situation by the same entity or for use by another entity in the organisation. For example in the case of marketing materials may exist in a particular market which make a marketing material asset applicable in that market but unsuitable for use in another market, without the information contained in a marketing brief unsuitable assets may be reused.

Another issue related to contextual information relating to assets is that for stored asset data is that where there is no, or only limited, contextual data stored in relation to the asset providing that data is a time consuming process requiring manual addition of meta-data to describe the context around the creation and use of the asset to which the asset data relates.

### SUMMARY OF THE DISCLOSURE

According to a first aspect of the present disclosure there is provided a data asset management system comprising:
a processor;
a data storage device;
wherein the processor is arranged to execute one or more application programming interfaces, APIs, to interface with one or more remote computing systems having stored thereupon asset data corresponding to an asset;
the processor being arranged to scrap one or more computing systems via the APIs to extract asset data and transfer the asset data to a data lake stored upon the data storage device;
the processor being further arranged to receive query text data from a user and being further arranged to interrogate the data lake in response to receiving the query text data, wherein interrogating the data lake comprises analysing meta data associated with the asset data by measuring the similarity of the query text data to meta data associated with the asset; and
the processor being arranged to output asset data having a measured similarity to the query text data meeting a predetermined threshold to the user.

The above detailed system provides a centralised repository of asset data that has been acquired from multiple sources and is interrogated using similarity methods in order to provide reusability of assets not currently provided for in existing systems, without interrupting the use of existing systems. This provides added functionality and interoperability of existing systems to allow the re-use of existing assets in an intelligent manner thereby reducing redundant work and computing resources over existing systems.

The query text data may comprise data corresponding to a requirements document defining a scope of work to be searched for. The requirement document may comprise a brief document detailing at least one of: concepts, goals, details of a marketing or advertising campaign.

In the analysis of the suitability of a marketing campaign's assets for re-use in another marketing campaign analysis of the marketing campaign brief provides contextual and cultural information that is helpful.

The processor may be arranged to embed a digital watermark into the asset data prior to output to the user.

The use of a digital watermark provides security against the unauthorised use of an asset by a third party once the asset is made available via a given channel, for example on a website.

Thee processor may be arranged to interrogate the data lake comprising executing an indexed search of the asset data stored in the data lake. The processor is arranged to interrogate the data lake comprising defining a taxonomy structure associated with metadata associated with the asset and reducing a search space within the taxonomy structure based for interrogation of the data lake based on previously determined search-based relevance metrics. The processor may arranged to interrogate the data lake comprising identifying asset data having a measured similarity to the query text data meeting a predetermined threshold. The processor may be arranged to execute an artificial intelligent based document similarity techniques to determine if asset data has a measured similarity to the query text data meeting the predetermined threshold

The processor may be arranged to apply regression analysis to the meta data contents of a class within the taxonomy structure to determine if meta data fields associated with an asset either contain incorrect meta data or are empty. The processor may be arranged to populate meta data associated with an asset that is determined to be either incorrect or empty with meta data with meta data having regression analysis scores in excess of a threshold value. The meta data having regression analysis scores in excess of the threshold value may be associated with other asset data in the data lake.

The population of incorrect or empty meta-data fields associated with an asset by means of cross-population from similar entries in the data lake provides dynamic improvements to the accuracy of interrogation of the data lake.

The processor may be arranged to interface with external analytics systems to access impact data indicative of an impact of an asset in an ecosystem and to populate a metadata field associated with said asset with the impact data. The impact data relates to each of a plurality of assets and the impact data is either relates to each respective asset and populates meta data associated with said specific asset or the impact data is common to the plurality of assets and metadata associated with each asset is populated with common impact data. The impact data may comprises data indicative of the usage of an asset in a marketing campaign at a given location and further comprises data associated with a plurality of marketing media at said location.

The impact of an asset can be a measure of, by way of non-limiting examples, a return on investment associated with an advertising campaign or more granularly the results of consumer sentiment study in relation to a piece of branding or an individual advertisement.

The processor may be arranged to scrape asset data from the one or more computing systems via the APIs.

Scraping asset data provides for the provision of a system wherein existing disparate systems can have the asset data stored upon them accessed and retrieved to the data lake in an efficient manner which does not interfere with their existing data structures and operation.

The asset may be a digital asset. The digital asset may be any one or combination of the following: a digital image, a digital animation, an audio file, a text file.

According to a second aspect of the present disclosure there is provided a processor arranged to operate as the processor of the first aspect of the present disclosure.

According to a third aspect of the present disclosure there is provided a non-transitory computer readable storage medium having stored thereupon instructions which when executed on a processor cause the processor to operate as the processor of the first aspect of the present disclosure.

According to a fourth aspect of the present disclosure there is provided a computer implemented method of data asset management comprising:
executing one or more application programming interfaces, APIs, on a processor of an asset management system to interface with one or more computing systems having stored thereupon asset data corresponding to an asset;
accessing the one or more computing systems via the APIs to extract asset data and transfer the asset data to a data lake stored upon a data storage device of the data asset management system ;
receiving query text data from a user and being further arranged to interrogate the data lake in response to receiving the query text data, wherein interrogating the data lake comprises analysing meta data associated with the asset data by measuring the similarity of the query text data to meta data associated with the asset;
generating a relevance score of one or more assets based on the interrogation of the data lake; and
outputting data corresponding to at least one asset having a relevance score meeting a predetermined threshold to the user.

According to a fifth aspect of the present disclosure there is provided a a computer implemented method of data asset management, corresponding to the actions executed by the processor of the first aspect of the present disclosure.

### BRIEF DESCRIPTION OF THE DRAWINGS

The present disclosure will now be described, by way of example only, with reference to the accompanying drawings, in which:
Figure 1 is a schematic diagram of a data asset management system according to an aspect of the present disclosure;
Figure 2 is an exemplary taxonomy tree associated with asset data stored in the data set management system of Figure 1; and
Figure 3 is a flow diagram of a method of data asset management according to an aspect of the present disclosures.

### DETAILED DESCRIPTION OF PREFERRED EMBODIMENTS

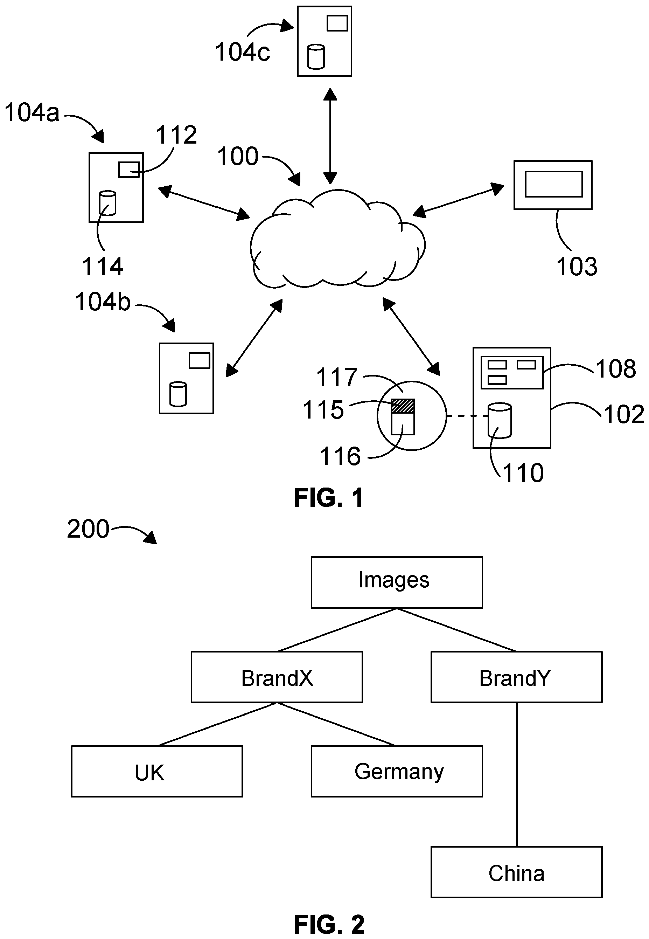

Referring now to Figures 1 and 2, a digital asset ecosystem 100 comprises a data asset management system 102, a user device 103, and a plurality of computer systems 104 a-c connected via a network 106. It will be appreciated that the network 106 can comprise the Internet, a proprietary network associated with one or more organisations, or a combination thereof.

The data asset management system 102 comprises a processor 108 and a data storage device 110 and application programming interfaces (APIs) 111a-c. It will be appreciated that the data storage device 110 can comprises local data storage and alternatively, or additionally, it can comprise cloud storage such as that provided by Amazon Web Services or Microsoft Azure.

Each of the plurality of computer systems 104a-c comprises a processor 112 and a storage device 114, which can be local storage, cloud storage or a combination of both. The storage device 114 has stored upon it asset data 115. The asset data 115 may, by way of non-limiting example, comprise any one or combination of the following image and/or video data of an image used in a marketing campaign, text data associated with a marketing campaign, a brief for a marketing campaign or audio data associated with a marketing campaign. It will be understood that whilst the present disclosure is exemplified with respect to digital assets associated with a marketing campaign it is equally applicable to any such asset in any applicable field, for example libraries of software routines in order to speed up software development and reduce duplication of effort and resource usage in coding.

In use, the data asset management system 102 is connected to a respective computer system 104a-c via an API 111a-c executed on the processor 108. It will be appreciated that although shown with each respective computer system 104a-c having a corresponding respective API 111a-c one API 111a-c may connect multiple computer systems to the data asset management system 102.

The processor 108 executes a data execution extraction routine which accesses the storage device 114 of one of the computer system 104a-c and identifies the specific asset data 115 or information, such as marketing assets, and marketing briefs, client feedback and any other pertinent data, along with metadata associated with that asset data 115. The target asset data 115 can be identified via a user input or by means of an artificial intelligence model that has been trained with documents and data of the types sought.

The data extraction routine may comprise a scraping routine coded in Python, Java, or trained scraping tools. These data extraction routine connects to the computer system 104a-c via the APIs 111a-c.

The data extraction routine finds the appropriate asset data 115 on the computer system 104 a-c, and copies it to a data storage lake 116 116 hosted on the data storage device 110 of the data asset management system 102. In the present context a data lake 116 116 is a data repository that collects data from multiple sources, and moved into the data lake 116 116 in its original format data lake 116 can include structured data from relational databases (rows and columns), semi-structured data (CSV, XML and JSON formats), unstructured data such as emails, documents etc., and binary data such as image, video and audio data. A data lake 116 allows scaling to data of any size, without the need to define data structures, schema, and transformations.

The processor 108 acts on meta data 117 in the data lake 116 associated with the asset data 115 to generate a taxonomy of the asset data 115, for example the processor parses the meta data 117 and categorises it in a taxonomy tree 200 in one non-limiting example classifying image data as "Images" and within images "Brand X", "Brand Y" and within "Brand X", "UK", "Germany" using the metadata associated with the asset data 115 such that a taxonomy tree 200 is constructed.

A user enters a query from a user interface on the user device 103. It will be appreciated that the user device may be, by way of non-limiting example, any of a mobile telephone, tablet, personal computer, smart watch, smart TV. The user interface will typically be a common user interface across all platforms to ensure maximum interoperability and reduce user familiarity timescales. The query may comprise a text query, for example, "What marketing materials do we have in relation to Brand X", a graphic query, for example uploading or linking to an image from a marketing campaign or a document format query for example uploading or linking to a marketing brief. The user query is transmitted across the network 106 to the data asset management system 102.

The processor 108 processes the query using for example natural language processing in the case of a text query or in the case of a document format query and the data lake 116 interrogated. In a non-limiting embodiment, the processor 108 executes an artificial intelligence (Al) document similarity technique, such as, by way of non-limiting example, Word2Vec, CBOW or Doc2Vect, to compare an assess similarities between a marketing brief document and asset data 115 within the data lake 116.

Metrics, such as, by way of non-limiting example, any one or more of the following, new referring users, user rating, asset optimization scores, Text readability metrics, impressions of the asset, keyword rankings, number of impacts on the web pages, Facebook add, Linkedln post that the asset is used in, associated with the meta data 117, organic visibility and/or traffic and/or conversions associated with the asset, views per visit are used to determine the relevance of an assets to the query.

The Processor prunes and/or reorders leaves of the taxonomy tree 200 based upon the relevance of an asset data 115 returned in response to the query such that the user receives search results based upon both the taxonomy and search information returned in response to the query.

In one exemplary embodiment the search executed in response to the query prunes and/orders the leaves of the taxonomy structure based on, by way on non-limiting example, a number of asset data 115 files with search hits associated with a relevant node or nodes of the taxonomy tree 200 and/or the number of taxonomy nodes of the taxonomy tree 200 having high relevance scores in their respective meta data 117, either as descriptors or tags or within an index of asset data 115.

The browsing order of the taxonomy nodes by the user is based on the search-based relevance metrics, such that the user is presented with the most relevant results associated with a node of the taxonomy tree 200 first.

Search hints are generated from earlier and next nodes of the currently found of those nodes of taxonomy tree 200 that are found to have a high relevance as described with reference to the metrics described hereinbefore selected by the user by browsing the taxonomy tree 200. The search hints are identified, in an exemplary non-limiting embodiment using one or either of the following metrics: lower fan taxonomy tree 200 reduction and/or higher fan taxonomy tree 200 reduction.

It will be appreciated that in the current context, lower means a node closer to root node of a taxonomy tree 200 and higher means a node closer to the final leaf nodes of the taxonomy tree 200

In lower fan taxonomy tree reduction a selected taxonomy tree 200 node has been selected additional relevant taxonomy tree 200 nodes may be relevant once a search term related to the query is included to a search, some of which may be lower in the taxonomy tree 200. Lower fan taxonomy tree 200 reduction measures the number of lower nodes that will be removed based on adding the keyword to the search. Correspondingly, higher fan taxonomy tree 200 reduction measures the number of lower nodes that will be removed based on adding the keyword to the search. As a user types a text string a query is launched to the search engine, for example when a blank space is typed, and the number of hits per taxonomy node is established. The results relating to the last sent full query will be processed and presented to the user as the search results.

The indexing of asset data 115 also comprises accounting for historical accessing of asset data 115 such that those nodes of the taxonomy tree 200 accessed previously by users, and optionally the frequency of access of those nodes, can be used to identify previously accessed nodes as potentially relevant nodes at any point during the search and/or taxonomy browsing. The historical accessing of asset data 115 can relate to internal accesses, such as viewing of an application or download of a search result and external usage data, such as the impact metrics discussed hereinbefore. This is added to the index for the purposes of improving search relevance and asset data retrieval. A relevance score is assigned to previously access nodes based on for example, the frequency of access of the node and/or relevance of meta data 117 associated with the node to the present search.

Any one or combination of the above detailed metrics can be generated and applied to the current, historic, taxonomy tree 200 and can be used to reorder or prune the taxonomy tree 200 in order to optimise it for the current query and/or to provide search results to the user, dynamically configuring and/or reconfiguring the taxonomy tree 200.

The ability to dynamically to dynamically configuring and/or reconfiguring the taxonomy tree 200 allows for the operator of the data asset management system 102 to provide taxonomy as a service to external parties by scraping their data and generating a taxonomy based upon it.

Furthermore, one or more of the APIs 111 a-c can be configured to access traffic impact from external enterprise analytics systems, such as by way of non-limiting example in the case of marketing campaign Google Analytics. Alternatively, or additionally, the APIs 111a-c access internal analytics systems of an organisation to provide, by way of nnon-limiting example, analytic data related to viewing of an application or download of a search result etc. Accessing of enterprise analytics systems will typically be executed by the processor 108 as a batch process that crawls he enterprise analytics systems and identifies the highest ranked campaign touch points, a threshold value for, by way on non-limiting example, traffic, web page impressions or graphics downloads being user configurable via the user interface, e.g. only the top 20% of relevance scores are returned to the user. The processor 108 recovers data corresponding to the assets identified in the enterprise analytics system from the identified touch points, by way of non-limiting example, including images, videos, widgets, headers, audio files and identify a corresponding asset data 115 element in the data lake 116 by comparing embedded tags in the two data files update the asset data 115 meta data 117 to include usage metrics to the asset data 115 such that it can be used as a search parameter or metric in future query searches.

Using the taxonomy as clusters of related asset data 115 are formed. In an embodiment, the processor 108 performs an anomaly detection algorithm employing a regression analysis across all meta data fields associated with the asset data 115 within these clusters provides a likelihood value of whether a given meta data field for a specific piece of asset data 115 is either populated with incorrect meta data 117 by applying a threshold to the likelihood vales or that the given meta data field is empty using an anomaly detection algorithm. It will be appreciated that other analysis methodologies can be employed such as, by way of non-limiting examples, clustering. The use of an anomaly detection algorithm at leaf nodes of different taxonomies enhances the consistency of the metadata across taxonomies.

From the regression analysis results the processor 108 can select the most likely meta data 117 from the cluster to populate the likely incorrect or empty meta data field and can auto-populate the given metadata field of the specific piece of asset data 115 with the most likely meta data 117 contents. In an embodiment, the processor 108 running the anomaly detection algorithm connects to the user device 103 to provide the user with an opportunity to review the proposed meta data 117 tagging in order that human oversight is maintained. For example, in the case of marketing campaign data the processor 108 connects to marketi.ng operations ticketing system, so the marketing team can first review the issues and approve and/or select the options provided by the anomaly detection algorithm or take a manual action such as rejecting it. It will be appreciated that in another embodiment user review may not occur and auto-population of meta data fields based on regression analysis thresholding may occur automatically.

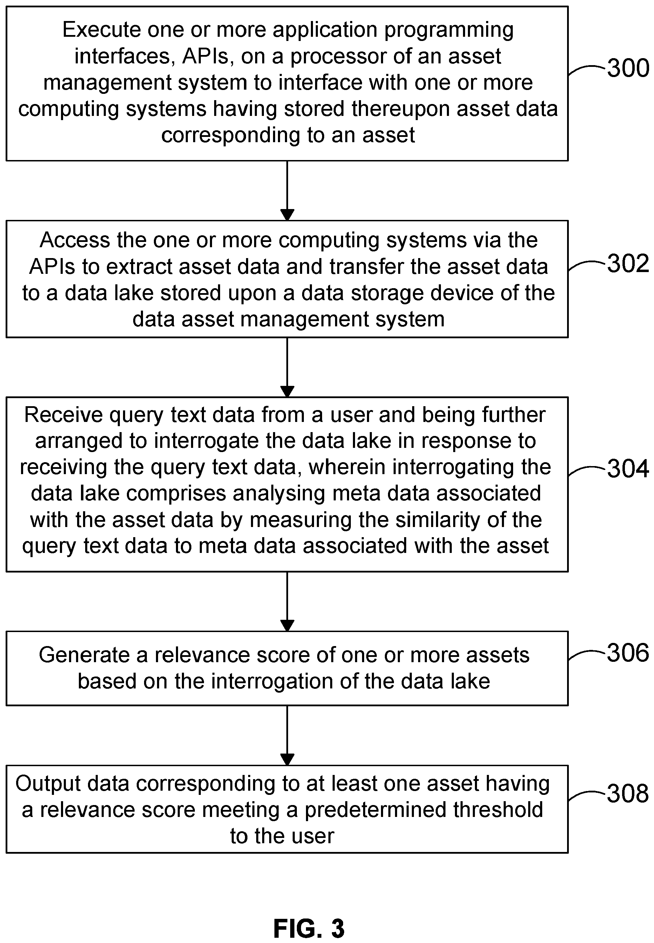

Referring now to Figure 3, a computer-implemented method of data asset management comprises executing one or more application programming interfaces, APIs, to interface with one or more remote computing systems having stored thereupon asset data 115 corresponding to an asset (Step 300). The method further comprises accessing one or more computing systems via the APIs to extract asset data 115 and transfer the asset data 115 to a data lake 116 stored upon the data storage device (Step 302). The method further comprises receiving query text data from a user and being further arranged to interrogate the data lake 116 in response to receiving the query text data, wherein interrogating the data lake 116 comprises analysing meta data 117 associated with the asset data 115 by measuring the similarity of the query text data to meta data 117 associated with the asset (Step 304). The method further comprises generating a relevance score of one or more assets based on the interrogation of the data lake 116 (Step 306) and outputting data corresponding to at least one asset having a relevance score meeting a predetermined threshold to the user (Step 308).

The method any optionally further comprise executing any step, process, algorithm or function described hereinbefore with reference to the processor 108 of Figure 1.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. The computer readable program instructions for carrying out operations of the embodiments of the invention may be, for example, assembly language or either source code or object code is written in any combination of one or more programming languages.

The program code embodied in any of the applications/modules described herein is capable of being individually or collectively distributed as a program product in a variety of different forms. In particular, the program code may be distributed using the computer readable storage medium having the computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other robust state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general-purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more, or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context indicates otherwise. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the general inventive concept.

## Claims

1. A data asset management system comprising:
a processor;
a data storage device;
wherein the processor is arranged to execute one or more application programming interfaces, APIs, to interface with one or more remote computing systems having stored thereupon asset data corresponding to an asset;
the processor being arranged to access one or more computing systems via the APIs to extract asset data and transfer the asset data to a data lake stored upon the data storage device;
the processor being further arranged to receive query text data from a user and being further arranged to interrogate the data lake in response to receiving the query text data, wherein interrogating the data lake comprises analysing meta data associated with the asset data by measuring the similarity of the query text data to meta data associated with the asset;
the processor being further arranged to generate a relevance score of one or more assets based on the interrogation of the data lake; and
the processor being arranged to output data corresponding to at least one asset having a relevance score meeting a predetermined threshold to the user.

2. The system of Claim 1, wherein the query text data comprises data corresponding to a requirements document defining a scope of work to be searched for.

3. The system of either Claim 1 or Claim 2, wherein the processor is arranged to embed a digital watermark into the asset data prior to output to the user.

4. The system of any preceding claim, wherein the processor is arranged to interrogate the data lake comprising executing an indexed search of the asset data stored in the data lake.

5. The system of any preceding claim, the processor is arranged to interrogate the data lake comprising defining a taxonomy structure associated with metadata associated with the asset and reducing a search space within the taxonomy structure based for interrogation of the data lake based on previously determined search-based relevance metrics.

6. The system of any preceding claim wherein the processor is arranged to interrogate the data lake 116 comprising identifying asset data having a measured similarity to the query text data meeting a predetermined threshold.

7. The system of any preceding claim wherein the processor is arranged to apply regression analysis to the meta data contents of a class within the taxonomy structure to determine if meta data fields associated with an asset either contain incorrect meta data or are empty.

8. The system of Claim 7 wherein the processor is arranged to populate meta data associated with an asset that is determined to be either incorrect or empty with meta data with meta data having regression analysis scores in excess of a threshold.

9. The system of any preceding claim wherein the processor is arranged to interface with external analytics systems to access impact data indicative of an impact of an asset in an ecosystem and to populate a metadata field associated with said asset with the impact data.

10. The system of Claim 9, wherein the impact data relates to each of a plurality of assets and the impact data is either relates to each respective asset and populates meta data associated with said specific asset or the impact data is common to the plurality of assets and metadata associated with each asset is populated with common impact data.

11. The system of either Claim 9 or Claim 10, wherein the impact data comprises data indicative of the usage of an asset in a marketing campaign at a given location and further comprises data associated with a plurality of marketing media at said location.

12. The system of any preceding claim, wherein the processor is arranged to scrape asset data from the one or more computing systems via the APIs.

13. A processor arranged to operate as the processor of any one of Claims 1 to 13.

14. A non-transitory computer readable storage medium having stored thereupon instructions which when executed on a processor cause the processor to operate as the processor of any one of Claims 1 to 13.

15. A computer implemented method of asset data management comprising:
executing one or more application programming interfaces, APIs, on a processor of an asset management system to interface with one or more computing systems having stored thereupon asset data corresponding to an asset;
accessing the one or more computing systems via the APIs to extract asset data and transfer the asset data to a data lake stored upon a data storage device of the data asset management system ;
receiving query text data from a user and being further arranged to interrogate the data lake in response to receiving the query text data, wherein interrogating the data lake comprises analysing meta data associated with the asset data by measuring the similarity of the query text data to meta data associated with the asset;
generating a relevance score of one or more assets based on the interrogation of the data lake; and
outputting data corresponding to at least one asset having a relevance score meeting a predetermined threshold to the user.
